# EUROPÄISCHE PATENTSCHRIFT

(11) **EP 0 736 956 B1**
(45) Veröffentlichungstag und Bekanntmachung des Hinweises auf die Patenterteilung: **19.06.2002**
(21) Anmeldenummer: 96102444.5
(22) Anmeldetag: 19.02.1996
(51) Int. Cl.: H02K 23/20, H02K 23/18, H02P 7/06

(54) **Bidirektionaler Gleichstrommotor**
Bidirectional DC motor
Moteur à courant continu bidirectionnel

(30) Priorität: 07.04.1995 DE 19513094
(43) Veröffentlichungstag der Anmeldung: 09.10.1996
(73) Patentinhaber: Leopold Kostal GmbH & Co. KG, 58507 Lüdenscheid (DE)
(72) Erfinder: Janca, Reiner, Dr., D-46286 Dorsten (DE); Borgmann, Uwe, Dr., D-45665 Recklinghausen (DE)

(56) Entgegenhaltungen:
- EP-A- 0 076 206
- EP-A- 0 125 961
- FR-A- 2 605 156

## Beschreibung

Die vorliegende Erfindung betrifft einen bidirektionalen Gleichstrommotor mit einem über jeweils zwei von drei Bürsten an eine Gleichspannungsversorgung anschließbaren Kommutator, wobei die drei Bürsten für die beiden Drehrichtungen jeweils in mit der gewünschten Motorcharakteristik korrelierenden, auf den Umfang des Kommutators bezogenen Abständen angeordnet und über für die beiden Drehrichtungen vorgesehene Schaltmittel mit der Gleichspannungsversorgung verbindbar sind, wobei die erste der drei Bürsten direkt an dem einen Pol der Gleichspannungsversorgung angeschlossen ist und die beiden anderen Bürsten über die Schaltmittel mit dem anderen Pol der Gleichspannungsversorgung verbindbar sind und wobei von den beiden anderen Bürsten die zweite Bürste gegenüber der einen Seite der ersten Bürste und die dritte Bürste gegenüber der anderen Seite der ersten Bürste beabstandet ist.

Gleichstrommotoren finden in Stellantrieben Verwendung und werden dabei insbesondere in Kraftfahrzeugen für Fensterhebe-, Schiebedachverstell-, Sitzverstell- und Scheibenwisch-Systeme eingesetzt.

Die Drehrichtung dieser Gleichstrommotoren wird - wie in der FR-A- 2 605 156 einleitend als bekannt vorausgesetzt - beispielsweise durch Umpolen der Betriebsspannung mittels einer dafür geeigneten, z.B. als Halbleiter-Brückenschaltung ausgebildeten Steuereinrichtung umgeschaltet.
Eine derartige Schaltung ist aufgrund der benötigten vier Schaltbausteine vergleichsweise aufwendig.

Darüberhinaus ist es durch die vorerwähnte Druckschrift bekannt, bei einem bidirektionalen Gleichstrommotor vier Bürsten anzuordnen, wobei zwei sich diametral gegenüberliegende Bürsten miteinander ständig verbunden und am positiven Pol der Gleichspannungsversorgung angeschlossen sind. Die beiden anderen Bürsten liegen sich ebenfalls diametral gegenüber und sind gegenüber den beiden vorerwähnten, ein Bürstenpaar bildenden Bürsten um einen bestimmten Winkel von z.B. 90° versetzt. Diese beiden Bürsten sind dann über aus jeweils einem jeder der beiden Bürsten zugeordneten Halbleiter-Schaltbaustein bestehende Schaltmittel am negativen Pol der Gleichspannungsversorgung angeschlossen.
Eine solche Schaltungsanordnung ist aber infolge der benötigten vier Bürsten ebenfalls recht aufwendig.

Schließlich ist durch die DE-A-2 137 834 ein bidirektionaler Gleichstrommotor bekanntgeworden, bei dem drei Bürsten vorhanden sind, wovon eine erste Bürste an dem negativen Pol der Gleichspannungsversorgung direkt angeschlossen ist, während jeweils eine der beiden anderen Bürsten über Schaltmittel mit dem positiven Pol der Gleichspannungsversorgung entsprechend der gewünschten Drehrichtung verbindbar ist, wobei eine dieser beiden Bürsten auf der einen und die andere auf der anderen Seite der ersten Bürste angeordnet ist.
Eine solche Ausführung ist aber dadurch relativ aufwendig, daß bei einer ggf. naheliegenden Ausbildung der Schaltmittel als Halbleiter-Schaltbausteine diese den positiven Pol der Gleichspannungsversorgung zu schalten hätten, was erheblich ungünstiger ist, als das Schalten des negativen Pols, wie es in der zuvorgenannten Druckschrift offenbart ist.

Allen vorerwähnten Vorveröffentlichungen ist aber zudem noch gemeinsam, daß sie keinen Hinweis darauf liefern, wie mit relativ einfachen Mitteln bzw. Maßnahmen Informationen über die aktuellen Bewegungsparameter des Gleichstrommotors bzw. der damit zusammenhängenden Verstellparameter des zu verstellenden Gegenstandes erzielbar sind.

Aufgabe der Erfindung ist die Bereitstellung einer relativ einfachen Anordnung zur Umschaltung der Drehrichtung eines Gleichstrommotors, wobei mit ebenfalls recht einfachen Mitteln eine Aussage über die aktuellen Bewegungsparameter des Gleichstrommotors bzw. des damit verbundenen, zu verstellenden Gegenstandes zu gewährleisten ist.

Diese Aufgabe wird nach der Erfindung dadurch gelöst, daß die erste der drei Bürsten am positiven Pol der Gleichspannungsversorgung liegt, daß die zweite und die dritte Bürste über zwei die Schaltmittel bildende , jeweils aus einem Halbleiter-Schaltbaustein bestehende Schalter mit dem auf Masse liegenden negativen Pol der Gleichspannungsversorgung verbindbar sind, und daß die zweite und die dritte Bürste über eine Leitung mit einer die Drehrichtung und/oder die Drehzahl des Kommutators und/oder die Position des zu verstellenden Gegenstandes erfassenden Auswerteschaltung verbunden sind.

Die Erfindung unterscheidet sich insofern vom Stand der Technik, daß die für den Recht- und Linkslauf des Gleichstrommotors vorgesehenen Halbleiter-Schaltbausteine an Masse angebunden sind. Dadurch läßt sich mit relativ einfach auszuführenden Schaltmitteln auch in recht einfacher Art und Weise eine Auswertschaltung für die Bestimmung der Drehrichtung und/oder der Drehzahl bzw. des Verstellweges zuordnen. Diese basiert vorzugsweise darauf, daß die am Kommutator periodisch sich ergebenden Spannungsschwankungen erfaßt werden.

Besonders günstig bei dem erfindungsgemäßen Gegenstand ist, daß die beiden auf der einen und der anderen Seite der einen (ersten) Bürste vorhandenen, für die Realisierung der beiden Drehrichtungen des Gleichstrommotors vorgesehenen Bürsten so angeordnet sein können, daß damit dem Recht- und dem Linkslauf unterschiedliche Charakteristiken zuzuordnen sind.

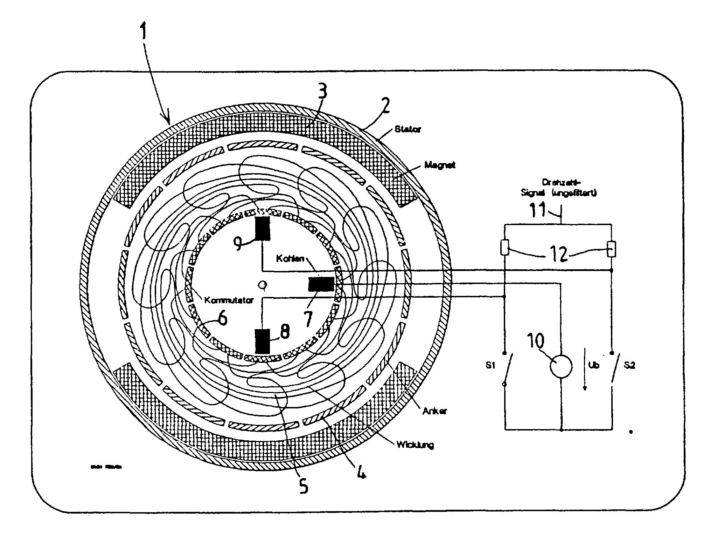

Weitere vorteilhafte Ausgestaltungen des erfindungsgemäßen Gegenstandes sind in den Unteransprüchen angegeben und werden anhand eines in der Zeichnung dargestellten Ausführungsbeispieles näher erläutert.

Wie aus der Zeichnung hervorgeht, besteht ein Gleichstrommotor 1 aus einem mit magnetischen Bauteilen 3 ausgestatteten Stator 2, in dem ein mit elektrischen Wicklungen 5 versehener Anker 4 angeordnet ist, der einen Kommutator 6 aufweist. Dem Kommutator 6 sind drei aus Graphit bestehende (Kohle-)Bürsten 7,8,9 zugeordnet.
Die erste Bürste 7 ist am positiven Pol + der Versorgungsspannung 10 z.B. der Bordspannungsquelle eines Kraftfahrzeuges angeschlossen. Die zweite gegenüber der einen Seite der ersten Bürste 7 in einem von der gewünschten Motorcharakteristik abhängigen Abstand angeordnete Bürste 8 ist über einen Schalter S1 mit dem negativen Pol - (Masse) der Versorgungsspannung 10 verbunden und legt zusammen mit der ersten Bürste 7 die eine Drehrichtung des Gleichstrommotors fest. Die dritte gegenüber der anderen Seite der ersten Bürste 7 in einem wiederum von der gewünschten Bürste 9 ist ebenfalls über einen Schalter S2 mit Masse verbunden und legt zusammen mit der Bürste 7 die Gegen-Drehrichtung fest.
Die Ansteuerung kann dabei entweder durch ein einpoliges Relais oder einen Halbleiter-Baustein erfolgen, wobei im Zusammenhang mit letzterem es besonders günstig ist, daß durch die masseseitige Anbindung ein relativ einfacher Aufbau gewährleistet ist. Als Halbleiter-Baustein kommt dabei insbesondere ein Feldeffekt-Transistor in Betracht. Die Schalter lassen sich auch in den Motor integrieren, so daß sich eine vereinfachte Verbindungstechnik ergibt.
Die zweite Bürste 8 und die dritte Bürste 9 sind über je einen Widerstand 12 an eine Leitung 11 angeschlossen, die zu einer für die Erfassung der Drehrichtung und/oder der Drehzahl vorgesehenen Auswerteschaltung führt. In diese Auswerteschaltung werden die am Kommutator 6 auftretenden periodischen Spannungsschwankungen ausgewertet. Die Periodizität dieses Signals ergibt sich aus Drehzahl x Polzahl. Entsprechend groß ist die Auflösung. Durch drehrichtungsabhängige Integration läßt sich die Position des zu verstellenden Gegenstandes genau erfassen. Auch die Drehzahl lässt sich mit hoher Auflösung berechnen.

## Patentansprüche

1. Bidirektionaler Gleichstrommotor mit einem über jeweils zwei von drei Bürsten (7,8,9) an eine Gleichspannungsversorgung (10) anschließbaren Kommutator (6), wobei die drei Bürsten für die beiden Drehrichtungen jeweils in mit der gewünschten Motorcharakteristik korrelierenden, auf den Umfang des Kommutators bezogenen Abständen angeordnet und über für die beiden Drehrichtungen vorgesehene Schaltmittel mit der Gleichspannungsversorgung verbindbar sind, wobei die erste (7) der drei Bürsten direkt an dem einen Pol der Gleichspannungsversorgung angeschlossen ist und die beiden anderen Bürsten (8,9) über die Schaltmittel mit dem anderen Pol der Gleichspannungsversorgung verbindbar sind und wobei von den beiden anderen Bürsten die zweite Bürste (8) gegenüber der einen Seite der ersten Bürste (7) und die dritte Bürste (9) gegenüber der anderen Seite der ersten Bürste beabstandet ist, **dadurch gekennzeichnet, daß** die erste (7) der drei Bürsten (7,8,9) am positiven Pol (+) der Gleichspannungsversorgung (10) liegt, daß die zweite und die dritte Bürste (8,9) über zwei die Schaltmittel bildende, jeweils aus einem Halbleiter-Schaltbaustein bestehende Schalter (S1, S2) mit dem auf Masse liegenden negativen Pol (-) der Gleichspannungsversorgung verbindbar sind, und daß die zweite und die dritte Bürste (8,9) über eine Leitung (11) mit einer die Drehrichtung und/oder die Drehzahl des Kommutators (6) und/oder die Position des zu verstellenden Gegenstandes erfassenden Auswerteschaltung verbunden sind.

2. Bidirektionaler Gleichstrommotor nach Anspruch 1, **dadurch gekennzeichnet, daß** die zweite Bürste (8) gegenüber der ersten Bürste (7) in einem Abstand angeordnet ist, der dem zwischen der dritten Bürste (9) und der ersten Bürste (7) vorhandenen Abstand entspricht.

3. Bidirektionaler Gleichstrommotor nach Anspruch 1, **dadurch gekennzeichnet, daß** die zweite Bürste (8) gegenüber der ersten Bürste (7) in einem Abstand angeordnet ist, der gegenüber dem zwischen der dritten Bürste (9) und der ersten Bürste (7) vorhandenen Abstand unterschiedlich ist.

4. Bidirektionaler Gleichstrommotor nach einem der Ansprüche 1 bis 3, **dadurch gekennzeichnet, daß** die beiden Schalter (S1,S2) jeweils aus einem Feldeffekttransistor bestehen.

5. Bidirektionaler Gleichstrommotor nach einem der Ansprüche 1 bis 4, **dadurch gekennzeichnet, daß** die zweite und die dritte Bürste (8,9) über jeweils einen Widerstand (12) an der Leitung angeschlossen sind.

## Claims

1. Bidirectional direct current motor with a commutator (6) which can be connected to a direct voltage supply (10) by way of two of three brushes (7,8,9) respectively, in which the three brushes for the two directions of rotation are each arranged at intervals relating to the circumference of the commutator and correlating with the desired motor characteristic and can be connected to the direct voltage supply by way of switching equipment provided for the two directions of rotation, whereby the first (7) of the three brushes is directly connected to the one pole of the direct current supply and the other two brushes (8,9) can be connected to the other pole of the direct current supply by way of the switching equipment and in which the second brush (8) of the other two brushes is positioned at a distance opposite the one side of the first brush (7) and the third brush (9) is positioned opposite the other side of the first brush, **characterized by the fact** that the first (7) of the three brushes (7,8,9) is connected to the positive pole (+) of the direct current supply (10), that the second and third brushes (8,9) can be connected to the negative pole (-) of the direct voltage supply connected to frame by means of two switches (S1,S2), each consisting of a semi-conductor switching module and constituting the switching equipment, and that the second and the third brush (8,9) are connected to an evaluation circuit which records the direction of rotation and/or the speed of the commutator (6) and/or the position of the object to be adjusted.

2. Bidirectional direct current motor in accordance with Claim 1, **characterized by the fact** that the second brush (8) is arranged opposite the first brush (7) at a distance to correspond with the space between the third brush (9) and the first brush (7).

3. Bidirectional direct current motor in accordance with Claim 1, **characterized by the fact** that the second brush (8) is arranged opposite the first brush (7) at a distance which is different from the space between the third brush (9) and the first brush (7).

4. Bidirectional direct current motor in accordance with any of Claims 1 to 3, **characterized by the fact** that each of the two switches (S1,S2) comprises a field-effect transistor.

5. Bidirectional direct current motor in accordance with any of Claims 1 to 4, **characterized by the fact** that the second and the third brush (8,9) are connected to the supply line by means of a resistor (12).

## Revendications

1. Moteur bidirectionnel à courant continu avec un collecteur (6) raccordable au système d'alimentation en tension continue (10) à l'aide de deux de trois balais (7, 8, 9) qui sont disposés, pour chacun des deux sens de rotation, sur le pourtour du collecteur, à des intervalles en corrélation avec la caractéristique du moteur, et peuvent être raccordés au système d'alimentation en tension continue par des moyens de commutation qui sont prévus pour les deux sens de rotation, le premier (7) des trois balais étant directement connecté à l'un des pôles du système d'alimentation en tension continue tandis que les deux autres balais (8, 9) peuvent être connectés, par l'intermédiaire de moyens de commutation, à l'autre pôle, le deuxième (8) des deux autres balais étant disposé à distance, de l'un des côté du premier balai (7) tandis que le troisième balai (9) est situé, à distance, de l'autre côté dudit premier balai,
**caractérisé en ce que**
le premier (7) des trois balais (7, 8, 9) est connecté au pôle positif (+) de la source de tension continue (10), tandis que les deux autres balais (8, 9) peuvent être connectés au pôle négatif (-), mis à la masse, de la source de tension continue, par l'intermédiaire de deux commutateurs (S1, S2) composés chacun d'un module à semi-conducteurs et formant les moyens de commutation, et que le deuxième balai et le troisième balai (8, 9) sont reliés, par une ligne à un circuit d'exploitation qui détecte le sens de rotation et/ou la vitesse de rotation du collecteur (6) et/ou la position de l'objet à déplacer.

2. Moteur bidirectionnel à courant continu selon la revendication 1,
**caractérisé en ce que**
le deuxième balai (8) est disposé, par rapport au premier balai (7) à une distance qui correspond à celle existant entre le troisième balai (9) et le premier balai (7).

3. Moteur bidirectionnel à courant continu selon la revendication 1,
**caractérisé en ce que**
le deuxième balai (8) est disposé, par rapport au premier balai (7), à une distance qui diffère de celle existant entre le troisième balai (9) et le premier balai (7).

4. Moteur bidirectionnel à courant continu selon l'une des revendications 1 à 3,
**caractérisé en ce que**
les deux commutateurs (S1, S2) consistent chacun en un transistor à effet de champ.

5. Moteur à courant continu bidirectionnel selon l'une des revendications 1 à 4,
**caractérisé en ce que**
le deuxième balai et le troisième balai (8, 9) sont raccordés chacun à la ligne par l'intermédiaire d'une résistance respective (12).
